Europäisches Patentamt

European Patent Office

Office européen des brevets

(19)

(11) Veröffentlichungsnummer: **0 221 395**
**B1**

(12) # EUROPÄISCHE PATENTSCHRIFT

(45) Veröffentlichungstag der Patentschrift:
29.08.90

(51) Int. Cl.⁵: **F16L 47/04,** F16L 23/02,
F16L 13/10

(21) Anmeldenummer: 86114071.3

(22) Anmeldetag: 10.10.86

(54) Flanschverbindung für faserverstärkte Kunststoffrohrteile.

(30) Priorität: 31.10.85 CH 4693/85

(43) Veröffentlichungstag der Anmeldung:
13.05.87 Patentblatt 87/20

(45) Bekanntmachung des Hinweises auf die Patenterteilung:
29.08.90 Patentblatt 90/35

(84) Benannte Vertragsstaaten:
AT BE CH DE ES FR GB IT LI LU NL SE

(56) Entgegenhaltungen:
EP-A- 0 152 753
CH-A- 623 393
DE-A- 1 475 678
DE-A- 2 122 793
DE-A- 2 850 025

(73) Patentinhaber: GEORG FISCHER
AKTIENGESELLSCHAFT, Mühlentalstrasse 105,
CH-8201 Schaffhausen(CH)

(72) Erfinder: Mueller, Wilhelm, Langrietstrasse 22,
CH-8212 Neuhausen/Rhf(CH)
Erfinder: Overath, Friedhelm, Kohlfirststrasse 13,
CH-8203 Schaffhausen(CH)
Erfinder: Weyer, Michael, Baumschulstrasse 2,
CH-8200 Schaffhausen(CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Flanschverbindung für faserverstärkte Kunststoffrohrteile, wie sie im Oberbegriff von Anspruch 1 gekennzeichnet ist.

Für die Weiterleitung von Medien insbesondere von aggressiven Medien in der chemischen Industrie werden Rohrleitungen mit einem inneren Mantel aus einem thermoplastischen Material, wie z.B. aus Polyäthylen, Polypropylen, Polyvinylchlorid, usw. und mit einem äusseren Mantel aus einem faserverstärkten Laminat, wie z.B. gewickelte Glasfasern mit einem ungesättigten Polyester-, Epoxyd- oder Vinylesterharz getränkt verwendet. Der äussere Laminat-Mantel dient zur Verstärkung der Rohre, um Medien mit höheren Drücken weiterleiten zu können, als auch zur Aufnahme von äusseren Kräften, wie z.B. von Zug-Druck oder Biegekräften auf die Rohrleitung.

Bei der Herstellung von lösbaren Verbindungen zwischen den Rohren bzw. zwischen Rohren und Fittings, wie z.B. Winkel, T-Stücke oder Reduktionen, ist es wichtig, dass das Medium nicht mit dem äusseren Mantel in Berührung kommt und die äusseren Kräfte im wesentlichen durch den äusseren Mantel weitergeleitet werden.

Bekannt ist die Flanschverbindung nach DIN 16966, Rohrtyp B, bei der Rohrende und Bundbuchse konisch angeschrägt, miteinander verklebt und damit kraftschlüssig, jedoch nicht formschlüssig verbunden werden. Nachteilig ist dabei die ungenügende Festigkeit der Verbindung zwischen Bundbuchse und Aussenmantel des Rohres.

Bei der in der CH-A-623393 gezeigten Rohrverbindung wird eine im Innendurchmesser glatte, mit einem Längsschlitz versehene, aussen konische Hülse mittels entsprechend konischen Flanschen derart gegen den Aussendurchmesser des Rohres durch radiale Verformung gespannt, dass eine Kraft- bzw. reibungsschlüssige Verbindung zwischen Rohr und Hülse entsteht. Eine formschlüssige Verbindung mit einer zusätzlichen Klebeverbindung ist daraus nicht entnehmbar. Da die Hülsen keinen Bund aufweisen, kann das Rohr mittels den Flanschen beim Anziehen der Schrauben radial deformiert werden. Ein radiales Aufsetzen der Hülse bei beschränkten Platzverhältnissen am Montageort ist nicht möglich.

Bei der durch die DE-A-1475678 bekannten Rohrverbindung werden die mit Bundbüchsen versehenen Rohre mittels Halbringen axial verspannt. Hierbei werden halbtorusförmige Mittelteile mittels auf die konischen Halbringe aufschiebbaren Ringen derart verformt, dass die Innenkanten des Mittelteils axial gegen die Flanschen der Bundbüchsen gedrückt werden. Diese Rohrverbindung entspricht nicht einer Flanschverbindung und weist auch nicht die formschlüssige Verbindung der Bundbüchsen mit den zu verbindenden Rohrenden auf.

Weiter ist eine Flanschverbindung der eingangs genannten Art (EP-A2-0152753) bekannt geworden, deren Bundbuchse mittels Gewinde am rohrförmigen Teil befestigt ist. Das Erstellen von Gewinden an aus Glasfaser-Laminaten hergestellten Teilen ist jedoch aufwendig, wobei die Qualität der Gewinde für einwandfreie Verbindungen oft nicht befriedigend ist. Ausserdem wird zum Aufschrauben der Bundbuchse in axialer Richtung ein freier Raum benötigt, welcher am Anschlussort, wo die Verbindung oft erst erstellt wird, meist nicht vorhanden ist.

Aufgabe der vorliegenden Erfindung ist die Schaffung einer Flanschverbindung der eingangs genannten Art, welche unter Vermeidung der vorgängig genannten Mängel am Verwendungsort erstellbar ist und welche die genannten Voraussetzungen betreffend der Weiterleitung der Kräfte und der mit dem Durchflussmedium in Beziehung kommenden Flächen erfüllt.

Erfindungsgemäss wird dies durch die kennzeichnenden Merkmale von Anspruch 1 gelöst.

Besonders vorteilhafte Ausgestaltungen der Erfindung sind in den abhängigen Ansprüchen gekennzeichnet.

Die erfindungsgemässen Merkmale ermöglichen ein radiales Aufsetzen der beiden Bundbuchsen-Hälften, wobei die in die Rillen eingreifenden wellenförmigen Erhebungen eine formschlüssige Kraftübertragung bei weitgehender Vermeidung von Kerbwirkungen auf den äusseren Mantel des rohrförmigen Teiles in axialer Richtung gewährleisten.

Durch die konische Partie der Bundbuchse und einer dazu korrespondierenden konischen Bohrung des Flanschringes werden die beiden Teile der Bundbuchsen während dem Klebevorgang fest auf den rohrförmigen Teil gehalten so dass eine feste Verbindung mit dem rohrförmigen Teil gegeben ist, wobei das Ausfüllen eventuell vorhandener Hohlräume mit Klebstoff eine Verhinderung von Permeationsschäden bewirkt.

Die massliche Ausbildung der konischen Flanschring-Bohrung und der konischen Partie der Bundbuchse wird dabei so gewählt, dass beim Anziehen der Schrauben der Flanschverbindung der Flansch bis zur Anlage an den Bund gebracht wird, ohne dass die Rohrenden in radialer Richtung deformiert werden.

Durch die Ausbildung des Ringflansches als Norm-Flansch sind diese faserverstärkten Kunststoffrohrteile an andere Systeme bzw. auch Ventile anschliessbar, wobei geringe Winkelfehler beim Anschluss zulässig sind.

Die Flanschverbindung ist direkt an der Montagestelle herstellbar, ohne dass eine Vorfertigung von Passlängen im Werk erforderlich ist.

Die Erfindung ist in den beiliegenden Zeichnungen beispielsweise dargestellt und nachfolgend beschrieben.

Es zeigen:

Fig. 1 einen Teillängsschnitt einer Flanschverbindung für faserverstärkte Rohrteile,
Fig. 2 ein Querschnitt entlang der Linie II-II von Fig. 1 und
Fig. 3 eine Ausführungsvariante in einem Teilausschnitt von Fig. 1.

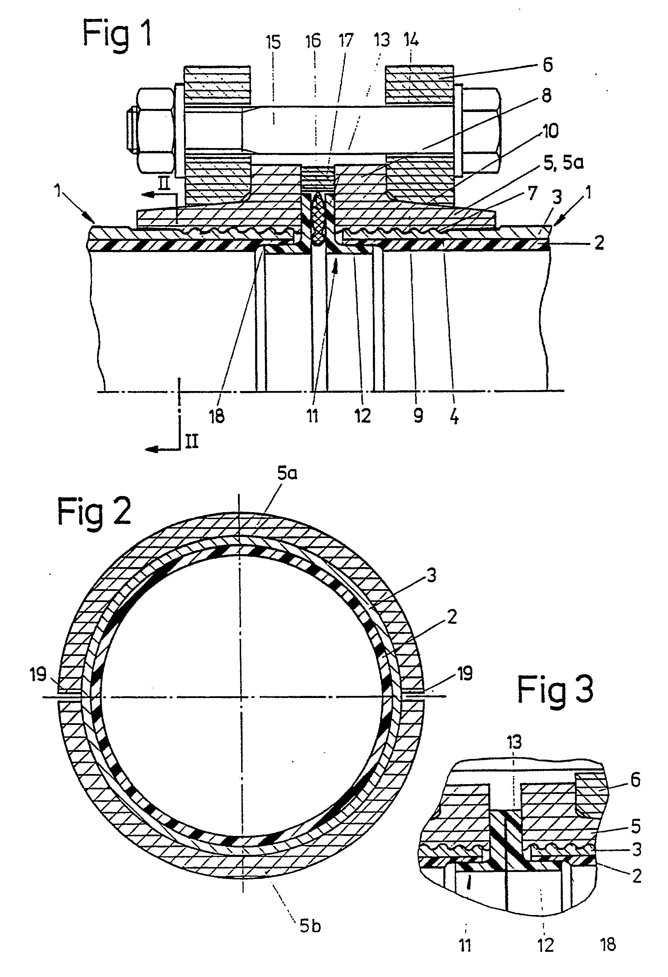

Fig. 1 und 2 zeigen eine lösbare Flanschverbindung zwischen zwei rohrförmigen Teilen 1, welche z.B. ein Leitungsrohr, ein Fitting wie z.B. ein Bogen, Winkel, T-Stück oder Reduktionsmuffe oder das Ausschlussende einer Armatur sein können.

Das rohrförmige Teil 1 weist einen inneren Mantel 2 aus einem thermoplastischen Material wie z.B. Polyäthylen, Polyvinylchlorid, usw. und einen äusseren Mantel 3 auf, welcher aus einer mit Kunstharz getränkten Faserwicklung besteht. Vorzugsweise wird ein Laminat aus Glasfasern mit einem ungesättigten Polyester-, Epoxyd- oder Vinylesterharz verwendet.

Der äussere Mantel wird auf fertig extrudierte Rohre bzw. vorgefertigten, wie z.B. gespritzten Fittings durch einen Laminiervorgang aufgebracht und ist mit dem inneren Mantel durch Adhäsion fest verbunden.

Das Ende jedes rohrförmigen Teiles 1 ist mit umfangsmässig verlaufenden Rillen 4 versehen, welche vorzugsweise wellenförmig, d.h. mit im Querschnitt runden Rillen und abgerundeten Uebergängen, ausgebildet sind. Diese Rillen 4 werden nach dem Abschneiden des Rohres auf die gewünschte Länge durch eine mechanische Bearbeitung angebracht.

Am Ende des rohrförmigen Teiles 1 ist eine mit einem losen Flanschring 6 versehene Bundbuchse 5 angeordnet. Bundbuchse 5 und Flanschring 6 sind ebenfalls aus einem Laminat - vorzugsweise aus Glasfasern und Kunstharz - hergestellt.

Die Bundbuchse 5 ist in Achsrichtung geteilt ausgebildet und besteht somit aus den beiden Teilen 5a und 5b. Am Innenumfang der Bundbuchse 5 sind wellenförmige Erhebungen 7 angeordnet, welche in den Rillen 4 des äusseren Mantels 3 liegend eine in Achsrichtung formschlüssige Verbindung bilden. Die Bundbuchse 5 ist zusätzlich zu der formschlüssigen Verbindung noch mit einer Klebeverbindung mit dem rohrförmigen Teil 1 fest verbunden. Es sind auch andere Querschnittsformen von Rillen 4 und entsprechenden Erhebungen möglich, wie z.B. viereckige, dreieckige, sägezahnförmige Formen, vorzugsweise mit abgerundeten Ecken.

Die Bundbuchse 5 weist eine vom Bund 8 ausgehende konisch sich verkleinernde Partie 9 auf. Der Flanschring 6 ist mit einer dazu korrespondierenden konischen Bohrung 10 versehen, so dass bei dem radialen Aufsetzen der beiden Teile 5a, 5b der Bundbuchse 5 diese durch Aufschieben des Flanschringes 6 auf die konishe Partie 9 während dem Klebevorgang fest auf dem rohrförmigen Teil 1 gehalten werden können.

Ein Abdeckring 11 ist mit seiner zylindrischen Partie 12 mit dem inneren Mantel 2 fest und dicht verbunden und überdeckt mit seiner Flanschpartie 13 das Ende des rohrförmigen Teiles 1 und teilweise die Stirnfläche der Bundbuchse 5. Der Abdeckring 11 besteht vorzugsweise aus dem gleichen thermoplastischen Material wie der innere Mantel 2 und ist mit diesem in einer zentrierenden Ausdrehung 18 verschweisst oder verklebt.

Mittels in Durchgangslöchern 14 angeordneten Schraubverbindungen 15 wird eine lösbare Verbindung mit einem zweiten, gleich ausgebildeten rohrförmigen Teil 1 hergestellt, wobei zwischen den Stirnseiten der Abdeckringe 11 eine Dichtung 16 aus einem gegenüber dem Durchflussmedium beständigen elastischen Material angeordnet ist. Zusätzlich kann am Aussenumfang der Dichtung 16 zwischen den Bundbuchsen 5 ein Distanzring 17 angeordnet werden, welcher die Kompression der Dichtung 16 festlegt und z.B. auch aus einem Glasfaser-Laminat hergestellt sein kann.

Bei der in Fig. 3 dargestellten Ausführungsvariante sind die Abdeckringe 11 gleichzeitig als Dichtung ausgebildet. Hierbei sind die aus einem thermoplastischen Material hergestellten Abdeckringe 11 mit der zylindrischen Partie 12 in einer Ausdrehung 18 des inneren Mantels 2 eingeschweisst oder eingeklebt, wobei die Dichtfläche der Flanschpartie 13 eine entsprechend feine Oberfläche aufweisen und plan verlaufen muss.

Das Erstellen der Rohrverbindung an der Baustelle wird wie nachstehend erläutert ausgeführt.

Nach dem Abschneiden des Rohres werden die Rillen 4 mittels eines Bearbeitungsgerätes am äusseren Mantel 3 durch mechanische Bearbeitung angebracht. Klebemasse - vorzugsweise ein Zweikomponentenkleber - wird mit einem Spachtel bis auf die Rillenhöhe aufgetragen. In die Rillen der geteilten Bundbuchse 5 wird ebenfalls in gleicher Weise Klebemasse aufgetragen.

Nach dem Aufschieben des Flanschringes 6 auf das Rohr werden die Bundbuchsenhälften 5a, 5b radial aufgesteckt und der Flanschring 6 auf die konische Partie 9 der Bundbuchse geschoben.

Am stirnseitigen Ende wird eine mit Bohrungen versehene Platte angesetzt und der Flanschring mittels Schrauben gegen den Bund 8 gezogen, wodurch die beiden Bundbuchsen-Hälften 5a, 5b fest gegen das Rohr 1 gedrückt werden. Dabei tritt überschüssige Klebemasse vorn, hinten und an den Längsspalten 19 aus, welche abgestreift wird. Die Verspannung des Flanschringes bleibt so lange erhalten bis die Klebemasse ausgehärtet ist.

Danach wird die Platte entfernt und der Flanschring 6 zurückgeschoben. Anschliessend wird der Abdeckring 11 stirnseitig eingesteckt und mit der Rohrinnenwandung verschweisst.

Beim Verbinden des Flansches mit einem auf gleicher Weise hergestellten Flansches eines zweiten Rohres oder mit einem an einer Armatur oder einem Fitting angeordneten Flansch wird der Flanschring 6 mittels den Schrauben 15 bis zur Anlage an den Bund 8 angezogen, wobei die Masse der konischen Bohrung 10 und der konischen Partie 9 an der Bundbuchse 5 so gewählt sind, dass zwar dort eine gegenseitige Anlage besteht, aber das Rohrende in radialer Richtung nicht deformiert wird.

**Patentansprüche**

1. Flanschverbindung von faserverstärkten Kunststoffrohrteilen (1), welche einen inneren Mantel (2) aus einem thermoplastischen Material und einen äusseren Mantel (3) aus einer mit Kunstharz getränkten Faserwicklung aufweisen, wobei am Ende der jeweiligen zu verbindenden rohrförmigen Teile (1) mittels einer Klebeverbindung und einer formschlüssigen Verbindung jeweils eine, mit einem an einem Bund (8) anliegenden losen Flanschring (6) versehenen Bundbuchse (5) mit einer konischen Partie (9) angeordnet ist und dass am inneren Mantel (2) ein mindestens das Ende des rohrförmigen Teiles (1) überdeckender Abdeckring (11) fest verbunden angeordnet ist, dadurch gekennzeichnet, dass die Bundbuchse (5) zweiteilig in Achsrichtung geteilt ausgebildet ist, dass die formschlüssige Verbindung durch umfangmässige, am Ende des rohrförmigen Teiles (1) und am Innenumfang der Bundbuchse (5) angeordnete, in Rohrlängsrichtung wellenförmig ausgebildete Rillen (4) bzw. Erhebungen (7) gebildet ist, dass der Flanschring (6) eine zur konischen Partie (9) der Bundbuchse (5) korrespondierende konische Bohrung (10) aufweist, wobei die Masse der konischen Bohrung (10) und der konischen Partie (9) an der Bundbuchse (5) so gewählt sind, dass die Teile (5a, 5b) der Bundbuchse (5) mittels des Flanschringes (6) während der Erstellung der Klebeverbindung zusammenhaltbar sind und der Flanschring (6) mittels den Schrauben (15) bis zur Anlage an den Bund (8) bringbar ist, ohne dass das Rohrende in radialer Richtung deformierbar ist.

2. Flanschverbindung nach Anspruch 1, dadurch gekennzeichnet, dass der Abdeckring (11) aus einem, dem inneren Mantel (2) entsprechenden Thermoplast hergestellt ist, mindestens teilweise die Stirnseite der Bundbuchse (5) überdeckt und mittels einer Schweissung mit dem inneren Mantel (2) fest verbunden ist.

3. Flanschverbindung nach einem der Ansprüche 1 oder 2, dadurch gekennzeichnet, dass die Bundbuchse (5) und der als Normflansch ausgebildete Flanschring (6) aus mit Kunstharz getränkten Glasfasern bestehen.

**Claims**

1. Flange connection of fibre-reinforced plastic pipe sections (1), which are made with an inner jacket (2) of a thermoplastic material and an outer jacket (3) made from a fibre winding soaked in a resin, where a flange bushing (5) with a detachable ring (6) lying up against a shoulder (8) with a cone-shaped section (9) is in each case located at the end of the tubular section (1) joined in each case by means of an adhesive joint and a form locked connection and that there is a solidly attached overlapping ring (11) on the inner jacket (2) located at least on the end of the tubular section (1), characterised in that the flange bushing (5) is designed in two parts with a split in the axial direction, that the form locked connection is established by grooves (4) or elevations (7) of ondulatory design in the longitudinal direction of the pipe located around the circumference at the end of the tubular section (1) and on the internal circumference of the flange bushing (5), that the flange ring (6) is made with a tapered hole (10) matching the cone-shaped section (9) of the flange bushing (5) where the dimensions of the tapered hole (10) of the cone-shaped section (9) on the flange bushing (5) is selected in such a way that the section (5a, 5b) of the flange bushing (5) can be held together by means of the flange ring (6) whilst the adhesive joint is being established and the flange ring (6) can be brought up against the shoulder (8) by means of screws (15) without it being possible for the end of the tube to be deformed in the radial direction.

2. Flange connection as in claim 1, characterised in that the overlapping ring (11) is made from thermoplastic corresponding to the inner jacket (2) at least partially overlapping the front face of the flange bushing (5) and is rigidly connected to the inner jacket (2) by means of a welding process.

3. Flange connection as in one of the claims 1 or 2, characterised in that the flange bushing (5) and the flange ring (6) developed as standard flange are made from glass fibres soaked with synthetic resin.

**Revendications**

1. Liaison par brides de pièces tubulaires (1) en matière plastique renforcées au moyen de fibres, qui présentent une enveloppe intérieure (2) en matériau thermoplastique et une enveloppe extérieure (3) constituée par un enroulement filamentaire imprégné de résine synthétique, un manchon à épaulement (5) comportant une partie conique (9) et muni d'une bride annulaire libre (6) appuyée contre un épaulement (8) étant disposé à l'extrémité de chacune des pièces tubulaires respectives (1) à relier, au moyen d'une liaison par collage et d'une liaison par ajustement de formes, et une bague de recouvrement (11) recouvrant au moins l'extrémité de la pièce tubulaire (1) étant disposée rigidement fixée sur l'enveloppe intérieure (2), caractérisée en ce que le manchon à épaulement (5) est divisé en deux parties dans la direction axiale, en ce que la liaison par ajustement de formes est constituée par des nervures (4), ou des saillies (7) ondulées dans la direction longitudinale du tube, disposées à l'extrémité de la pièce tubulaire (1) et sur la périphérie intérieure du manchon à épaulement (5), en ce que la bride annulaire (6) présente un alésage conique (10) correspondant à la partie conique (9) du manchon à épaulement (5), les dimensions de l'alésage conique (10) et de la partie conique (9) du manchon à épaulement (5) étant choisies telles que les parties (5a, 5b) du manchon à épaulement (5) puissent être maintenues assemblées pendant la réalisation de la liaison par collage et que la bride annulaire (6) puisse être amenée au moyen des vis (15) en appui sur l'épaulement (8) sans que l'extrémité du tube soit déformée dans le sens radial.

2. Liaison par brides selon la revendication 1, caractérisée en ce que la bague de recouvrement (11) est réalisée en une matière thermoplastique correspondant à l'enveloppe intérieure (2), en ce qu'elle recouvre au moins partiellement l'extrémité du manchon à épaulement (5) et en ce qu'elle est rigidement reliée à l'enveloppe intérieure (2) au moyen d'une soudure.

3. Liaison par brides selon l'une des revendications 1 ou 2, caractérisée en ce que le manchon à épaulement (5) et la bride annulaire (6) en forme de bride normalisée sont constitués par des fibres de verre imprégnées de résine synthétique.

Fig 1

Fig 2

Fig 3